Europäisches Patentamt

European Patent Office

Office européen des brevets

(11) Publication number: **0 069 787**
**B1**

(12) **EUROPEAN PATENT SPECIFICATION**

(45) Date of publication of patent specification: **04.12.85**

(21) Application number: **81105366.9**

(22) Date of filing: **09.07.81**

(51) Int. Cl.⁴: **F 16 F 15/08,** B 60 K 5/12,
F 16 F 1/54

(54) **A cushioned mounting device.**

(43) Date of publication of application:
**19.01.83 Bulletin 83/03**

(45) Publication of the grant of the patent:
**04.12.85 Bulletin 85/49**

(84) Designated Contracting States:
**DE FR GB**

(56) References cited:
**DE-A-2 149 421**
**DE-A-2 308 079**
**DE-A-2 328 566**
**FR-A-2 031 658**
**FR-A-2 287 626**
**FR-A-2 328 891**
**GB-A- 521 520**
**GB-A- 662 688**
**US-A-3 565 373**
**US-A-4 252 301**

(73) Proprietor: **TOYOTA JIDOSHA KABUSHIKI KAISHA**
**1, Toyota-cho Toyota-shi**
**Aichi-ken 471 (JP)**

(72) Inventor: **Atsumi, Tomiaki**
**6-12-9, Imacho**
**Toyota-shi, Aichi-ken (JP)**
Inventor: **Kuse, Kazumasa**
**3-1-1, Hirayamacho**
**Toyota-shi, Aichi-ken (JP)**
Inventor: **Deto, Junji**
**9-132, Oobayashicho**
**Toyota-shi, Aichi-ken (JP)**

(74) Representative: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**D-8000 München 2 (DE)**

Courier Press, Leamington Spa, England.

# Description

The present invention relates to a cushioned mounting device, and more particularly, to a cushioned mounting device for use in mounting an engine to the body of a vehicle such as an automobile, as described in the precharacterizing part of claim 1.

An engine for an automobile is mounted to the body of an automobile by means of such a cushioned mounting device as mentioned in GB—A—662 688. In this engine mounting structure, relative movement between the frame members and the mass member in parallel to each other may cause undue shearing deformation of the cushion members thus impairing durability of the mounting device.

It is an object of the present invention to provide a cushioned mounting device that permits limitation of the shear loads and has improved performances by a strong and durable structure.

According to the present invention, these objects are accomplished by the features as claimed in the characterizing part of claim one. The annular side wall portion of the first and the flange portion of the second frame member can be effectively utilized as a means for limiting shearing deformation within a proper range which ensures highly elastic deformation of the elastomeric material. Such a limitation on the shearing deformation is positively obtained by making these portions of the first and the second frame member abut against one another.

By this structure, the first and/or the second frame member can have a firm and rigid structure even when it is made of a relatively thin plate of steel or the like, wherein the substantially flat central portion which provides said face portion for connection with the cushion member and bears the load applied thereto is reinforced by the flange portion and the annular side wall portion respectively which may extend substantially perpendicularly to the central portion. Further the inversed bowl-like shaped first frame member protects the first and second cushion members which will be made of a rubber-like material which is liable to heat damaging from heat radiation while operating on the other hand as a fin member for dissipating heat therefrom, and that this first frame member also cooperates with the second frame member as a means for restricting the amount of relative movement between the first and second frame members in their cushioned mounting operation so as to protect the first and second cushion members from over-deformation.

In cushioned mounting devices provided as obliquely arranged supports for vehicle engines, comprising one cushion element sandwiched between parallel frame members, it is known to limit the deformation rate of the cushion element caused by a main force acting obliquely upon the support, by flanges of the frame members (DE—A—21 49 421) to prevent the engine from striking against car parts.

In order to make the abutting between these portions shockless and soundless, according to claim 1, the flange portion of said second frame member may be covered with a layer of an elastomeric material. Such a layer of an elastomeric material may be formed integrally with the first or the second cushion member, as described in claim 3.

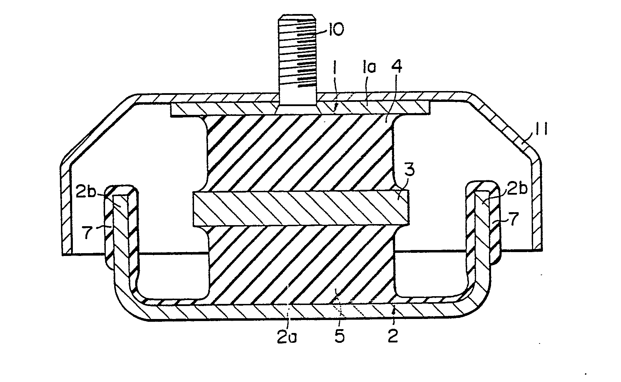

The present invention will be more clearly understood from the detailed description given hereinbelow and the accompanying drawing with respect to one preferred embodiment thereof, which is given by way of illustration only, and therefore does not restrict the present invention in any way, and wherein the Fig. is an axial sectional view of one embodiment of the cushioned mounting device according to the present invention.

Referring to the Fig. reference numerals 1 and 2 designate a first frame member and a second frame member, respectively. The first frame member 1 has a plane central portion 1a. The second frame member 2 has a plane central portion 2a and substantially symmetrical flange portions 2b extending integrally from two opposite end portions of the plane central portion 2a, which has also a rectangular plane shape, to be substantially perpendicular to the plane central portion 2a. These two frame members are arranged relative to each other in such a manner that a first face portion which is the inner surface portion of the central portion 1a of the first frame member 1 and a second face operation which is the inner surface portion of the central portion 2a of the second frame member 2 are positioned substantially in parallel and opposite to each other.

Between the first frame member 1 and the second frame member 2 there is disposed a mass member 3 which is a rectangular plane plate having a plane contour.

A first cushion member 4 made of an elastomeric material is provided between the central portion 1a of the first frame member 1 and the mass member 3 so as flexibly to connect these two members. Similarly a second cushion member 5 made of an elastomeric material is provided between the central portion 2a of the second frame member 2 and the mass member 3 so as flexibly connect these two members. The end portions of the second cushion member 5 on its one end closer to the second frame member 2 are extended over the inside surface of the flange portions 2b and further over the outside surfaces of the flange portions 2b by turning around the tip edge portions of the flange portions 2b, thereby providing side cushions 7 on the outside surfaces of the flange portions 2b. These cushion members are bonded to the first and the second frame members and the mass member by vulcanization.

The first frame member 1 includes an inversed bowl-like flange member 11 mounted over the plate member 1a. The plane-shaped mass member 3 is relatively small so as not to extend over the flange portions 2b of the second frame member 2. The flange portions 2b operate as a means for limiting shearing deformation of the cushion member 5 which is caused by relative movement between the second frame member 2 and the mass member 3 in parallel to each other, by one of the flange portions 2b abutting against the annular flange member 11 by way of the side cushion 7.

A bolt 10 mounted to the first frame member 1 is provided for the purpose of mounting this cushioned mounting device to an engine not shown in the figure.

## Claims

1. A cushioned mounting device comprising a first frame member (1) having a first face portion (1a), a second frame member (2) having a second face portion (2a), said first and second frame members being arranged relative to each other in such a manner that said first and second face portions oppose to each other, a mass member (3) having a plate portion disposed between said first face portion of said first frame member and said second face portion of said second frame member, a first cushion member (4) made of an elastomeric material and provided between said first face portion of said first frame member and said plate portion of said mass member and flexibly connecting said first frame member and said mass member, and a second cushion member (5) made of an elastomeric material and provided between said second face portion of said second frame member and said plate portion of said mass member and flexibly connecting said second frame member and said mass member, characterized in that said first frame member (1) is an inversed bowl-like member having an annular side flange portion (11) extending around said first face portion (1a) thereof, said second frame member (2) has a substantially U-shaped cross-section including at least two flange portions (2b) extending from opposite ends of said second face portion (2a) thereof, and each of said flange portions (2b) of said second frame member (2) is positioned between said mass member (3) and said annular side flange portion (11) of said first frame member (1) so as to restrict relative sideward and opposing movement between said first frame member (1) and said second frame member (2) and so as to restrict relative sideward movement between said mass member (3) and said second frame member (2).

2. A cushioned mounting device according to claim 1, wherein said flange portions (2b) of said second frame member (2) are provided with cushion layers (7) on their outer and edge surfaces where they oppose said annular side flange portion (11) of said first frame member (1).

3. A cushioned mounting device according to claim 2, wherein said cushion layers (7) are formed as integrally extended portions of said second cushion member (5), said integrally extended portions being extended over inside surfaces of said flange portions (2b) of said second frame member (2).

## Patentansprüche

1. Gefedertes Einbauelement mit einem ersten Rahmenteil (1) mit einem ersten Stützflächenabschnitt (1a), einem zweiten Rahmenteil (2) mit einem zweiten Stützflächenabschnitt (2a), wobei das erste und das zweite Rahmenteil derart zueinander angeordnet sind, daß sich der erste und der zweite Stützflächenabschnitt gegenüberliegen, einem Massenteil (3) mit einem Plattenabschnitt, der zwischen dem ersten Stützflächenabschnitt des ersten Rahmenteils und dem zweiten Stützflächenabschnitt des zweiten Rahmenteils angeordnet ist, einem ersten Federelement (4) aus einem elastomeren Werkstoff, das zwischen dem ersten Stützflächenabschnitt des ersten Rahmenteils und dem Plattenabschnitt des Massenteils angeordnet ist und das erste Rahmenteil und das Massenteil elastisch miteinander verbindet, und einem zweiten Federelement (5) aus einem elastomeren Werkstoff, das zwischen dem zweiten Stützflächenabschnitt des zweiten Rahmenteils und dem Plattenabschnitt des Massenteils angeordnet ist und das zweite Rahmenteil elastisch mit dem Massenteil verbindet, dadurch gekennzeichnet, daß das erste Rahmenteil (1) ein umgekehrtes Becherelement mit einem ringförmigen Seitenflanschabschnitt (11) ist, der sich um den ersten Stützflachenabschnitt (1a) des Rahmenteils erstreckt, daß das zweite Rahmenteil (2) einen etwa U-förmigen Querschnitt und zumindest zwei Flanschabschnitte (2b) aufweist, die sich von entgegengesetzten Enden des zweiten Stützflächenabschnitts (2a) des zweiten Rahmenteils (2) erstrecken, und daß jeder Flanschabschnitt (2b) des zweiten Rahmenteils (2) zwischen dem Massenteil (3) und dem ringförmigen Seitenflanschabschnitt (11) des ersten Rahmenteils (1) angeordnet ist, so daß eine relative Seiten- und entgegengesetzte Bewegung zwischen dem ersten Rahmenteil (1) und dem zweiten Rahmenteil (2) und eine relative Seitenbewegung zwischen dem Massenteil (3) und dem zweiten Rahmenteil (2) begrenzt ist.

2. Gefedertes Einbauelement nach Anspruch 1, bei dem die Flanschabschnitte (2b) des zweiten Rahmenteils (2) auf ihren Außen- und Randflächen, an denen sie dem ringförmigen Flanschabschnitt (11) des ersten Rahmenteils (1) gegenüberliegen, mit Dämpfungsauflagen (7) versehen sind.

3. Gefedertes Einbauelement nach Anspruch 2, bei dem die Dämpfungsauflagen (7) als einstückig aus dem zweiten Federelement (5) hervorgehende Abschnitte ausgebildet sind, die sich über Innenflächen der Flanschabschnitte (2b) des zweiten Rahmenteils (2) erstrecken.

## Revendications

1. Dispositif de montage à garniture d'amortissement, comprenant un premier élément de cadre (1) qui présente une première partie de surface (1a), un second élément de cadre (2) qui présente une seconde partie de surface (2a), lesdits premier et second éléments de cadre étant disposés l'un par rapport à l'autre de façon telle que lesdites première et seconde parties de surface soient placées en vis-à-vis, un élément de masse (3) comportant une partie formant plaque disposée entre lesdites première et second parties de surface desdits premier et second éléments de cadre, un premier élément (4) de garniture d'amortissement en matériau élastomère disposé entre ladite première partie de surface dudit premier élément de cadre et ladite partie formant plaque dudit élément de masse et reliant de manière flexible ledit premier élément de cadre et ledit élément de masse, ainsi qu'un second élément (5) de garniture d'amortissement en matériau élastomère disposé entre ladite seconde partie de surface dudit second élément de cadre et ladite partie formant plaque dudit élément de masse et reliant de manière flexible ledit second élément de cadre et ledit élément de masse, caractérisé en ce que ledit premier élément de cadre (1) est un élément formant cuvette renversée pourvue d'une partie (11) forment bride annulaire latérale qui s'étend autour de ladite première partie de surface (1a) de cet élément, ledit second élément de cadre (2) présentant une section transversale sensiblement en U qui comporte au moins deux parties (2b) formant brides s'étendant à partir des extrémités opposées de ladite seconde partie de surface (2a) dudit élément, cependant que chacune desdites parties (2b) formant brides dudit second élément de cadre (2) est disposée entre ledit élément de masse (3) et ladite partie formant bride annulaire latérale (11) dudit premier élément de cadre (1), de manière à limiter les déplacements relatifs et opposés dudit premier élément de cadre (1) et dudit second élément de cadre (2), et à limiter les déplacements relatifs latéraux dudit élément de masse (3) et dudit second élément de cadre (2).

2. Dispositif de montage à garniture d'amortissement selon la revendication 1, dans lequel lesdites parties (2b) formant brides dudit second élément de cadre (2) sont pourvues de couches de garniture d'amortissement (7) sur leurs surfaces extérieures et marginales où elles font face à ladite partie (11) formant bride annulaire latérale dudit premier élément de cadre.

3. Dispositif de montage à garniture d'amortissement selon la revendication 2, dans lequel lesdites couches (7), de garniture d'amortissement sont constituées par des prolongements solidaires dudit second élément (5) de garniture d'amortissement, lesdits prolongements s'étendant sur les surfaces intérieures desdites parties (2b) formant brides dudit second élément de cadre (2).